# EUROPÄISCHE PATENTSCHRIFT

(11) **EP 0 538 605 B1**
(45) Veröffentlichungstag und Bekanntmachung des Hinweises auf die Patenterteilung: **10.04.1996**
(21) Anmeldenummer: 92115222.9
(22) Anmeldetag: 05.09.1992
(51) Int. Cl.: E05F 3/14, F16F 9/30, F16F 7/06, F16D 41/06, G11B 15/675, F16D 41/22

(54) **Dämpfungselement zur Dämpfung einer Schubbewegung**
Damper element for damping a translating movement
Elément amortisseur pour un mouvement de translation

(30) Priorität: 25.10.1991 DE 4135216
(43) Veröffentlichungstag der Anmeldung: 28.04.1993
(60) Teilanmeldung: 95104601.0
(73) Patentinhaber: fischerwerke Artur Fischer GmbH & Co. KG, D-72178 Waldachtal (DE)
(72) Erfinder: Weber, Wilfried, Dipl.-Ing. (FH), W-7295 Schopfloch (DE)

(56) Entgegenhaltungen:
- DE-A- 2 160 903
- DE-A- 3 601 720
- DE-A- 3 722 114
- US-A- 4 574 423
- US-A- 4 697 673

## Beschreibung

Die Erfindung betrifft ein Dämpfungselement zur Dämpfung einer vorzugsweise durch eine Feder ausgelöste Schubbewegung gemäß der Gattung des Anspruches 1.

Zum Öffnen von Aschenbechern, Schubladen, Aufnahmefächern insbesondere bei in Kraftfahrzeugen eingebauten Geräten wird zur Verbesserung des Bedienungskomfort Dämpfungselemente eingesetzt. Die Dämpfungselemente bestehen aus einem mit einer zähen Flüssigkeit gefüllten Gehäuse, in dem sich über eine Welle mit einem Antriebselement verbunden eine Friktionsscheibe befindet. Bei dem Antriebselement handelt es sich in der Regel um ein Zahnrad, das mit einer Zahnstange oder einem Zahnradsegment in Verbindung steht. Das Dämpfungselement ist an dem zu bewegenden Teil angebracht, auf das beispielsweise ein Federelement als Antriebsaggregat einwirkt. Durch das Abrollen des Zahnrades auf der Zahnstange wird die Friktionsscheibe in der mit einer zähen Flüssigkeit, beispielsweise Silikonoel, gefüllten Gehäuse in Drehung versetzt. Durch an der Umfangsfläche angeordneten Kerben und Ausnehmungen wird die Friktionsscheibe durch die erhöhte Reibung abgebremst, so daß sich eine gedämpfte Schubbewegung des zu bewegenden Teils, beispielsweise einer sich öffnenden Klappe, ergibt. Das Schließen der Klappe erfolgt in der Regel durch Zurückdrücken des Teils von Hand. Durch die direkte Verbindung zwischen Antriebselement und Friktionsscheibe wirkt die Bremse des Dämpfungselementes auch beim Zurückdrücken und Schließen der Klappe. Dies wird üblicherweise von der Bedienungsperson als lästig empfunden, da ein erhöhter Kraft- und Zeitaufwand zum Schließen erforderlich ist. Ferner wird durch einen zu starken Druck beim Schließen das Friktionselement einer erhöhten Belastung ausgesetzt, was einen erhöhten Verschleiß des Dämpfungselementes bewirkt.

In der US-A-4 697 673 wird daher ein Dämpfungselement vorgeschlagen, das einen in einem Hohlraum des Antriebselementes angeordneten Freilauf besitzt. Dieser Freilauf ist durch eine Torsionsfeder gebildet, die sich in einer Drehrichtung auf der Achse des Antriebselementes verspannt und damit eine drehmomentübertragende Verbindung zwischen dem Antriebselement und der Friktionsscheibe des Dämpfungselementes herstelit. In entgegengesetzter Drehrichtung wird der Durchmesser der Torsionsfeder aufgeweitet, sodaß sich eine Unterbrechung der Verbindung ergibt. Diese Art der Gestaltung des Freilaufes ist für die Übertragung von geringen Kräften wenig geeignet, da die Verspannung bzw. Aufweitung der Torsionsfeder entsprechende Kräfte erfordert. Desweiteren ist die Herstellung und Montage des bekannten Dämpfungselementes sehr aufwendig, da Dämpfungselement und Antriebselement eine Einheit bilden und aufeinander abgestimmt sind.

Der Erfindung liegt die Aufgabe zugrunde, ein Dämpfungselement zu schaffen, das im Bedarfsfalle kostengünstig mit einem nur in einer Drehrichtung eine Dämpfung bewirkenden Freilauf ausgestattet werden kann.

Die Lösung dieser Aufgabe wird durch die im Anspruch 1 angegebenen Merkmale erreicht. Der durch ein Kunststoffteil mit Nabe und von der Nabe ausgehenden, in Umfangsrichtung abstehenden und in Drehrichtung gebogenen Federarmen gebildete Freilauf wird in einem konzentrisch um seine Rotationsachse angeordneten Hohlraum des Antriebselementes eingesetzt. Damit kann in einfacher Weise ein Dämpfungselement mit der zusätzlichen Funktion ausgestattet werden, daß in einer Drehrichtung eine Dämpfung bewirkt und in der entgegengesetzten Drehrichtung die Dämpfung aufgehoben wird. Der Freilauf ist ein einfaches Kunststoffspritzgußteil, das kostengünstig hergestellt und in das Antriebselement eingebaut werden kann. Die drehmomentübertragende Verbindung und die Unterbrechung der Verbindung werden schon bei geringsten Kräften wirksam, so daß das erfindungsgemäße Dämpfungselement mit Freilauf vor allem für Kleinteile geeignet ist.

In der Zeichnung ist die Erfindung anhand eines Ausführungsbeispieles nähers erläutert. Es zeigen:
- Figur 1: das in einem Aufnahmebehälter für Magnetbandkassetten eingebaute Dämpfungselement,
- Figur 2: der im Antriebselement des Dämpfungselementes eingesetzte Freilauf,
- Figur 3: eine perspektivische Ansicht des den Freilauf bildenden Kunststoffteiles.

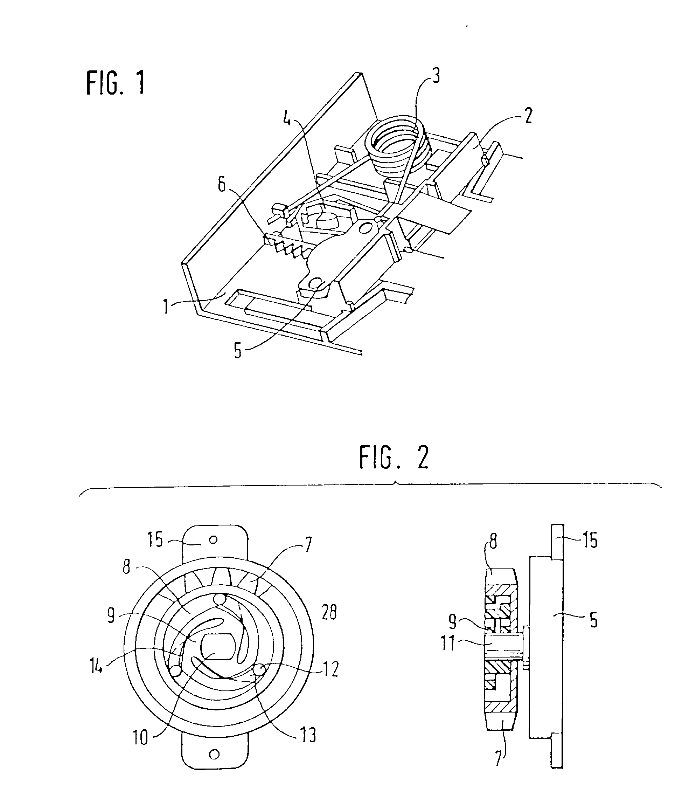

In der in Figur 1 dargestellten Bodenplatte 1 eines Behälters für die Aufnahme von Magnetbandkassetten ist ein Schieber 2 geführt, der von einem Federelement 3 nach dem Entriegeln eines Schließmechanismus 4 den Schieber 2 in die Entnahmeposition für die Kassette verschiebt. Zur Dämpfung dieser Ausfahrbewegung ist auf den Schieber 2 ein Dämpfungselement 5 aufmontiert, das mit einem Zahnrad als Antriebselement in eine auf der Bodenplatte angeordnete Zahnstange 6 eingreift. Beim Ausfahren des Schiebers wird durch das Abrollen des Zahnrades auf der Zahnstange 6 die im Dämpfungselement 5 befindliche Friktionsscheibe mitgedreht, die aufgrund der erhöhten Reibung in der im Dämpfungselement enthaltenen zähen Flüssigkeit als Bremse bei der Ausfahrbewegung des Schiebers 2 wirkt.

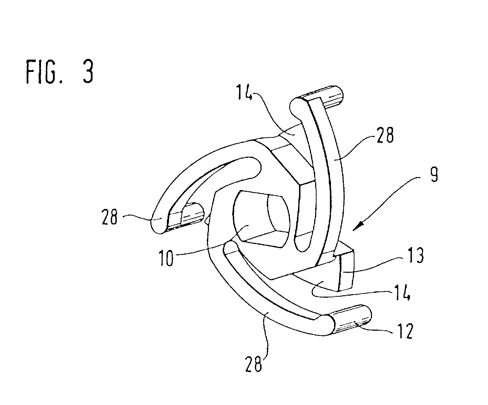

In Figur 2 ist das Dämpfungselement 5 mit dem als Zahnrad ausgebildeten Antriebselement 7 dargestellt, in dessen konzentrisch zur Rotationsachse angeordneten Hohlraum 8 ein Freilauf eingesetzt ist. Der Freilauf besteht aus dem in Figur 3 perspektivisch dargestellten Kunststoffteil 9, das eine mit zwei Flächen versehene Bohrung 10 zum Aufstecken auf das aus dem Dämpfungselement 5 herausragende Ende der Welle 11 aufweist. An dem Kunststoffteil 9 sind drei in Umfangsrichtung abstehende und in Drehrichtung gebogene Federarme 28 angesetzt, an deren Enden einseitig abstehende Klemmteile 12 angeordnet sind. Die Klemmteile 12 verkeilen sich beim Ausfahren des Schiebers 2 zwischen der Innenwandung des Hohlraumes 8 des Zahnrades 7 und den am Kunststoffteil 9 ausgebildeten Schrägflächen 13. Durch die Verkeilung erfolgt eine Drehmomentübertragung vom Zahnrad 7 auf die Welle 11 des Dämpfungselementes 5, so daß die im Dämpfungselement befindliche Friktionsscheibe mitgedreht wird. Damit wird eine Dämpfung der Schubbewegung des Schiebers 2 beim Ausfahren erreicht.

Beim Einschieben des Schiebers von Hand erfolgt eine Umkehrung der Drehrichtung des Zahnrades 7. Durch die Elastizität der Federarme 28 werden die Klemmteile 12 aus der Verkeilung gelöst, so daß nunmehr das Kunststoffteil 9 in dem Hohlraum des Antriebselementes 7 durchdrehen kann. Damit ist die drehmomentübertragende Verbindung zwischen der Friktionsscheibe im Dämpfungselement und dem Zahnrad 7 unterbrochen, so daß das Zahnrad 7 ungebremst auf dem Freilauf durchdrehen kann. Um ein Einbiegen der Federarme 28 auf die Schrägflächen 13 zu ermöglichen, sind im Bereich der Schrägflächen Aussparungen 14 des Kunststoffteiles 9 vorgesehen. Zur Befestigung des Dämpfungselementes 5 an den Schieber 2 weist das Dämpfungselement Befestigungslaschen 15 auf.

## Patentansprüche

1. Dämpfungselement (5) zur Dämpfung einer vorzugsweise durch eine Feder (3) ausgelöste Schubbewegung, bestehend aus einem mit einer zähen Flüssigkeit gefülltem Gehäuse, in dem sich auf einer Welle (11) gelagert und drehmomentübertragend mit der Welle gekoppelte Friktionsscheibe befindet, die über ein außerhalb des Gehäuses auf der Welle (11) sitzendes Antriebselement (7) drehbar ist, das einen konzentrisch um seine Rotationsachse angeordneten Hohlraum (8) mit einem Freilauf aufweist, **dadurch gekennzeichnet**, daß der Freilauf durch ein Kunststoffteil (9) mit Nabe und von der Nabe ausgehenden, in Umfangsrichtung abstehenden und in Drehrichtung gebogenen Federarmen (28) gebildet ist, an deren Enden einseitig abstehende Klemmteile (12) angeordnet sind, die zwischen am Kunststoffteil (9) angeordneten Schrägflächen (13) und der Innnenwandung des Hohlraumes (8) des Antriebselementes (7) in einer Drehrichtung verklemmbar sind, wobei die Nabe des Kunststoffteiles (9) jeweils im Bereich der Schrägflächen (13) Aussparungen (14) zum Einbiegen der Federarme (28) aufweist.

2. Dämpfungselement nach Anspruch 1, **dadurch gekennzeichnet**, daß von der Nabe drei in Umfangsrichtung abstehende und in Drehrichtung gebogene Federarme (28) ausgehen.

## Claims

1. A damping element (5) for damping a translatory movement that has preferably been initiated by a spring (3), consisting of a housing, filled with a viscous fluid, in which there is a friction disc mounted on a shaft (11) and coupled with the shaft so as to transfer torque, the friction disc being rotatable by way of a drive element (7) that sits on the shaft (11) outside the housing and comprises a cavity (8) arranged concentrically about its axis of rotation with a free-wheel mechanism, characterized in that the free-wheel mechanism is formed by a plastics part (9), with a hub and resilient arms (28) which start from the hub and project in the circumferential direction and are curved in the direction of rotation, at the ends of which resilient arms there are arranged clamping parts (12) projecting to one side which are arranged to become wedged between sloping surfaces (13) formed on the plastics part (9) and the inner wall of the cavity (8) of the drive element (7), the hub of the plastics part (9) having in the region of each sloping surface (13) a recess (14) for bending inwards of the respective resilient arm (28).

2. A damping element according to claim 1, characterized in that three resilient arms (28) projecting in the circumferential direction and curved in the direction of rotation start from the hub.

## Revendications

1. Élément amortisseur (5) pour amortir un mouvement de translation déclenché de préférence par un ressort (3), constitué d'un boîtier, rempli d'un liquide visqueux, dans lequel se trouve un disque de friction qui est porté sur un arbre (11), est couplé avec l'arbre pour transmettre un couple et qui peut être entraîné en rotation par l'intermédiaire d'un élément d'entraînement (7) qui est monté sur l'arbre (11) à l'extérieur du boîtier et présente un espace creux (8), avec une roue libre, disposé concentriquement autour de son axe de rotation, caractérisé par le fait que la roue-libre est formée par une pièce plastique (9) avec moyeu et par des bras élastiques (28) qui partent du moyeu, viennent en saillie selon la direction périphérique, sont cintrés dans le sens de rotation et aux extrémités desquels sont fixées des pièces de bridage (12) qui viennent en saillie d'un côté et peuvent se coincer, dans un sens de rotation, entre des surfaces obliques (13) disposées sur la pièce plastique (9) et la paroi intérieure de l'espace creux (8) de l'élément d'entraînement (7), le moyeu de la pièce plastique (9 présentant au voisinage de chacune des surfaces obliques (13) des évidements (14) pour le cintrage des bras élastiques (28).

2. Élément amortisseur selon la revendication 1, caractérisé par le fait que, du moyeu, partent trois bras élastiques (28) qui viennent en saillie selon la direction périphérique et sont cintrés dans le sens de rotation.
